# EUROPEAN PATENT SPECIFICATION

(11) **EP 2 264 125 B1**
(45) Date of publication and mention of the grant of the patent: **05.03.2014**
(21) Application number: 09723704.4
(22) Date of filing: 25.03.2009
(51) Int. Cl.: C09K 11/08, C09K 11/00, C09K 11/78, C09K 11/79, C09K 11/80, C09K 11/77, C03C 4/12

(54) **TRANSPARENT PHOSPHOR AND PROCESS FOR PRODUCING THE TRANSPARENT PHOSPHOR**
TRANSPARENTER PHOSPHOR UND VERFAHREN ZUR HERSTELLUNG DES TRANSPARENTEN PHOSPHORS
LUMINOPHORE TRANSPARENT ET PROCÉDÉ DE FABRICATION DU LUMINOPHORE TRANSPARENT

(30) Priority: 26.03.2008 JP 2008081681
(43) Date of publication of application: 22.12.2010
(73) Proprietor: Ube Industries, Ltd., Ube-shi Yamaguchi 755-8633 (JP)
(72) Inventor: OOTSUBO, Hideki, Ube-shi Yamaguchi 755-8633 (JP)
(74) Representative: Grünecker, Kinkeldey, Stockmair & Schwanhäusser
(86) International application number: PCT/JP2009/055957
(87) International publication number: WO 2009/119668

(56) References cited:
- WO-A2-2005/021449
- WO-A2-2007/128016
- JP-A- 2006 321 689
- JP-A- 2007 031 196
- JP-A- 2007 231 105
- US-A- 3 855 144
- US-A1- 2006 181 196

## Description

### Technical Field

The present invention relates to a transparent phosphor that provides white fluorescent light and a method of manufacturing the same.

### Background Art

Generally, white LEDs include a powder phosphor which emits yellow fluorescent light in response to blue excitation light and which is provided on the excitation light source as sealed thereon by a transparent resin or a low-melting-point glass. The white LEDs produce a white color by mixing the yellow fluorescent light and the blue light that is transmitted through the transparent resin in the phosphor layer. However, the white LEDs, which have the powder phosphor sealed thereon by the transparent resin or the low-melting-point glass, have a problem that the life thereof might be shortened, because the transparent resin or the low-melting-point glass might discolor or deform due to deterioration caused by heat produced by the LED chip and the excitation light.

Under such circumstances, it is proposed that white LEDs be manufactured without a resin or a low-melting-point glass that easily deteriorates (see Patent Literature 1). The subject matter described in Patent Literature 1 includes a crystallized glass and produces white light based on yellow fluorescent light that is provided by the precipitated crystal constituting the crystallized glass in response to blue light excitation, and on the blue light that is transmitted through the glass constituting the crystallized glass.

Meanwhile, the subject matter described in Patent Literature 1 has a problem of poor color rendering property, because the white light is composed of blue light and yellow light. Methods considered for overcoming such a poor color rendering property include, for example, a method of using in combination with an ultraviolet LED, two or more kinds of powder phosphors that emit red fluorescent light, blue fluorescent light, and green fluorescent light in response to ultraviolet excitation light.
Patent Literature 2 discloses a glass and a glass ceramic comprising the constituents SiO₂, Al₂O₃, and Y₂O₃ in combination with rare earth elements Eu, Tb or Ce. Patent Literature 3 discloses Tm and Dy ions as rare earth activators in a white light emitting phosphor. Patent Literature 4 generally describes a luminescent device having a silica glass target containing selected rare earth oxides as activators.
Patent Literature 1: JP 2007-31196 A
Patent Literature 2: US 2006/ 181196 A1
Patent Literature 3: WO 2007/128016 A2
Patent Literature 4: US 3 855 144 A

### Disclosure of Invention

### Problem to be Solved by the Invention

However, if a crystalline phosphor is manufactured by using two or more kinds of powder phosphors, the phosphor might not be able to emit light having a desired fluorescent color, because a conceivable manufacturing process includes dense compacting of the two or more kinds of fluorescent powders by mixing and sintering, and the temperature necessary for the compacting is in a high temperature range in which the activities of the phosphors are promoted to cause element migration between each fluorescent powder and its adjoining fluorescent powder.

Hence, the present invention aims for providing a transparent phosphor having a fine color rendering property and made without a resin or a low-melting-point glass that easily deteriorates, and a method of manufacturing the same.

### Means for Solving the Problem

To achieve the above object, the inventors conducted a series of devoted researches and found out that it was possible to obtain a transparent phosphor made without a resin or a low-melting-point glass that easily deteriorates and having a fine color rendering property, by making the transparent phosphor from two or more kinds of fluorescent phases: whose main phase is an amorphous phase composed mainly of A (A being any one or more elements of Al, Ga, Ge, W, P, V, Zn, Si, B, Mg, Ca, Ba, Sr, And Sc), Ln (Ln being any one or more elements of Y, Gd, La, Sm, Dy, Ho, Er, Yb, and Lu), O, and R as an activator (R being any one or more elements of Eu, Tb, Ce, Sm, Tm, Pr, Nd, Dy, Ho, Er, Yb, Mn, Ti, Fe, Cr, and Pb that is/are other than an element or elements selected as Ln); and which are different from each other at least in the kind of R or the average valence of R. That is, the transparent phosphor according to the present invention which provides white fluorescent light upon incidence of excitation light is characterized in being composed of two or more kinds of fluorescent phases whose main phase is an amorphous phase mainly composed of A, Ln, O, and R as an activator and which are different from each other at least in the kind of R or the average valence of R. The transparent phosphor according to the present invention is obtained by mixing two or more kinds of fluorescent particles each having a main phase made of the amorphous phase, and pressurizing a mixture of the fluorescent particles at a temperature at which 30vol% or more of the two or more kinds of fluorescent particles are in their supercooled liquid regions.

The present invention also provides a method of manufacturing a transparent phosphor, wherein the phosphor is compacted, including: a step of mixing two or more kinds of fluorescent particles whose main phase is the amorphous phase; and a step of pressurizing the mixture of the fluorescent particles at a temperature at which 30vol% or more of the components of the two or more fluorescent particles are in their supercooled liquid regions. The present invention also provides a method of manufacturing a transparent phosphor including: a step of mixing fluorescent particles whose main phase is the amorphous phase and which have overlapping supercooled liquid regions; and a step of pressurizing the mixture of the fluorescent particles at a temperature at which the supercooled liquid regions overlap.

### Effect of the Invention

As described above, according to the present invention, it is possible to provide a transparent phosphor made without a resin or a low-melting-point glass that easily deteriorates and having a fine color rendering property, and a method of manufacturing the same.

### Best Mode for Carrying Out the Invention

A transparent phosphor according to the present invention is made without a resin or a low-melting-point glass because it is made of fluorescent phases whose main phase is an amorphous phase, and has a fine color rendering property because it is made of two or more kinds of fluorescent phases. The transparent phosphor according to the present invention is transparent, has a fine optical transmissivity, and is suitable as a phosphor used for a white LED, because it is made of fluorescent phases whose main phase is an amorphous phase. A method of manufacturing a transparent phosphor according to the present invention manufactures a compacted transparent phosphor by pressurizing two or more kinds of fluorescent particles whose main phase is an amorphous phase. In the pressurizing process, the fluorescent particles have a high fluidity in a temperature range that is by far lower than their melting point. Therefore, the fluorescent particles can be densely compacted in this temperature range, and the resulting transparent phosphor maintains the composition and structure of the phosphors before compacted and can thus maintain the fluorescent properties before the compacting. Because having such a high fluidity, the fluorescent phases having their respective emission colors can be dispersed uniformly, thus preventing excitation light from not being supplied to a specific fluorescent phase.

In the transparent phosphor according to the present invention, the main phase of the fluorescent phases is an amorphous phase whose main components are A, Ln, O, and R described above. However, a crystalline phase which is mainly composed of these components may exist in the amorphous phase, and it is preferred that the longer diameter of the crystalline phase be 200 nm or shorter. As long as the longer diameter of the crystalline phase existing in the amorphous phase is 200 nm or shorter, the transparency is not spoiled because light backscattering is suppressed. Here, the longer diameter of the crystalline phase means the longest diameter, if the crystalline phase is not a true sphere.

In the transparent phosphor according to the present invention, it is preferred that the excitation light has a wavelength of 490 nm or shorter. The transparent phosphor according to the present invention is compacted into an arbitrary shape.

What is meant by that the main components of the fluorescent phases are A, Ln, O, and R is that the fluorescent phases may contain other components than A, Ln, O, and R in trace amounts within a range in which A, Ln, O, and R are not disturbed from remaining amorphous, and that A, Ln, O, and R account for, for example, 95wt% or higher. What is meant by that the main phase of the fluorescent phases is an amorphous phase is that the fluorescent phases may contain a crystalline phase in a trace amount, and that the amorphous phase accounts for, for example, 70vol% or higher. Hence, there are cases when the fluorescent phases are composed only of an amorphous phase, and are composed of an amorphous phase in which a crystalline phase exists.

In the fluorescent phases, A may be any one or more elements of Al, Ga, Ge, W, P, V, Zn, Si, B, Mg, Ca, Ba, Sr, and Sc, but it is preferred that A be any one or more elements of Al, P, Si, Ga, and Sr. Ln may be any one or more elements of Y, Gd, La, Sm, Dy, Ho, Er, Yb, and Lu, but it is preferred that Ln be any one or more elements of Y, Gd, La, and Lu. R may be any one or more elements of Eu, Tb, Ce, Sm, Tm, Pr, Nd, Dy, Ho, Er, Yb, Mn, Ti, Fe, Cr, and Pb, but it is preferred that R be Eu, Tb, Ce, Sm, Tm, and Pr. When the preferred elements described above are selected, it becomes easier to obtain a transparent phosphor that has a high density and provides light having a high luminance in the visible range. When Al is selected as A, it becomes further easier to obtain spherical fluorescent particles that provide light having a high luminance in the visible range.

The two or more kinds of fluorescent phases described above may contain the same combination of elements for A, Ln, and O at the same composition ratio or different composition ratios, or may contain different combinations of elements at the same composition ratio or different composition ratios, as long as they are different at least in the kind of R or the average valence of R. It is preferred that elements having overlapping supercooled liquid regions be selected for A, Ln, and O, but as will be described later, it is only necessary that 30vol% or more of the elements have overlapping supercooled liquid ranges.

As described above, the method of manufacturing a transparent phosphor according to the present invention includes a step of mixing two or more kinds of fluorescent particles and a step of pressurizing the mixture of the fluorescent particles at a temperature in the supercooled liquid regions. It is preferred that the method include a step of obtaining spherical fluorescent particles by forming the amorphous phase by cooling and solidifying molten particles made of the components of the fluorescent particles.

The reason for obtaining spherical fluorescent particles by cooling and solidifying molten particles is that the composition that contains the main components described above is a composition outside a normal vitrification range and thus easily crystallized by solidifying, and hence an amorphous solidification having a bulky state cannot be obtained from such a composition unless a special manufacturing method called "crucible-less method" is used which does not use a vessel such as a crucible that tends to become a nucleus of crystallization, and which obtains an amorphous solidification having a relatively small size by melting a solid sample by laser heating while rotating and suspending the solid sample by various methods, and then cooling the sample by extinguishing the laser.

According to such a method of manufacturing molten particles, the molten particles become spherical and the fluorescent particles whose main phase is the amorphous phase also become spherical. Therefore, the filling density of the fluorescent particles at the time of compacting is improved, and a small surface area is obtained. Accordingly, the resulting transparent phosphor can obtain improved density and transparency and an improved shaping property, and can provide light having a high luminance.

The molten particles made of the components of the fluorescent particles contain these components in a spherical shape and in a molten state. Such molten particles can be obtained by, for example, a flame method, an atomizing method, and a spin disk method. The flame method is particularly preferable. The flame method is a method of passing particles, each one of which is made of the components, through a high temperature range equal to or higher than their melting point, and, for example, obtains spherical particles in a molten state by melting compositionally-prepared particles by subjecting them to chemical flame or thermal plasma. The atomizing method is a method of melting a material made of the components in a crucible or the like and squirting the melt from pores opened in the crucible. The spin disk method is a method of bombarding a melt onto a disk spinning at a high speed while maintaining the molten state.

The flame method can use a powder material obtained by a spray drier, etc., particles obtained by crushing a bulk material made of a sintered material or made of a melted and solidified material with adjustment for obtaining a desired particle size distribution, etc. The flame method is carried out by subjecting the particles to chemical flame or thermal plasma to melt them in the chemical flame or the thermal plasma while suppressing agglomeration of the particles.

The flame method can also use a liquid precursor that contains elements such as a colloid liquid of a material, an organometallic polymer, etc. at a desired composition ratio. The flame method is carried out by spraying the liquid material from nozzles or the like into chemical flame or thermal plasma and melting the material in the chemical flame or the thermal plasma after evaporating the solvent or the dispersion medium. A low-temperature heating region may be provided between the nozzles and the chemical flame or the thermal plasma so that the material can be subjected to the chemical flame or the thermal plasma after the solvent or the dispersion medium in the liquid material is evaporated.

In the flame method, the source of chemical flame may be anything as long as a high temperature of 2400°C or higher can be obtained. For example, a mixed gas of oxygen-acethylene, the same mixed gas additionally containing hydrogen, etc. are preferably used because they can easily provide a high temperature. As the source of thermal plasma, oxygen, nitrogen, argon, carbon dioxide gas, and a mixed gas of them, and water are used. When a gas is used, an inductive coupling type plasma apparatus is used. However, it is preferable to use water.

In the case of the atomizing method or the spin disk method, the materials may be any of powder, a compact, a sintered body, and a solidification, or a combination of two or more of them. These materials are melted after they are set in a crucible having a melting point higher than that of the materials, for example, a crucible made of Mo, W, Ta, Ir, Pt, etc., or a crucible made of Cu which is cooled by water, etc. The melting method may be any method as long as it can heat the materials up to a temperature equal to or higher than their melting point, and may use, for example, a high-frequency wave, plasma, laser, electron beam, light, infrared, etc. It is preferred that the materials be melted in an atmosphere in which the materials do not evaporate or decompose, and in which the crucible is not greatly worn. An optimum atmosphere is selected from air, inert gas, vacuum, etc., according to the materials and the material of the crucible to be used.

The atomizing method can form spherical molten particles by squirting a melt from fine pores opened in the bottom of the crucible, etc. by using gas pressure, etc. The spin disk method can form spherical molten particles by bombarding a melt onto a spinning disk by tilting a crucible or by squirting the melt from fine pores opened in the bottom of a crucible, etc. by using gas pressure like in the atomizing method, etc.

Oxides of the components of the above-described fluorescent particles are used as the materials of the molten particles. However, it is only necessary that the components be oxidized when melted, and hydroxide, carbonate, etc. may be used. It is preferred that the composition ratio of the materials be a ratio at which an eutectic composition is formed or be in a range of ±10wt% of this ratio. This is because when, for example, the composition of the spherical fluorescent particles made of Al, Y, O, and Eu as an activator is in such a range, it becomes easier for the composition to become amorphous because of having a relatively low melting point, etc., and to form spherical fluorescent particles having a fine spherical shape.

Next, the spherical molten particles are cooled to form an amorphous phase. This cooling step can be carried out by, for example, subjecting the spherical molten particles to a refrigerant to quench and solidify the particles. In the case of the molten particles containing the above-described main components, it is possible to solidify them in a nonequilibrium condition by quenching them by a liquid refrigerant. Since these spherical particles are solidified with their atomic structure in their molten state substantially maintained, the particles undergo an extremely low level of solidification shrinkage and can provide spherical particles having a fine spherical shape. Further, quenching by a refrigerant can suppress contact between the particles before solidified, and hence can impart a fine spherical shape to the particles. A preferable refrigerant is a noncombustible medium, and for example, helium gas, water, liquid nitrogen, liquid argon, etc. can be used. The spherical fluorescent particles are solidified with their atomic structure in their molten state substantially maintained under the effect of quenching by a liquid refrigerant, and hence undergo an extremely low level of solidification shrinkage and can provide spherical fluorescent particles having a fine spherical shape.

After this, the fluorescent particles are cleaned or thermally treated if necessary, and any impurities on the surface of the fluorescent particles are removed. If the fluorescent particles have few impurities on the surface, the transparent phosphor to be obtained by mixing and compacting the two or more kinds of fluorescent particles can achieve a better transparency. The cleaning is carried out according to purposes by using an organic solvent such as acetone, isopropyl alcohol, etc., or various acids. When the fluorescent particles have an easily reducible composition, they might provide better fluorescent light if heated in an oxygen coexisting atmosphere. Therefore, thermal treatment in an air or oxygen atmosphere is carried out at a temperature of 400°C or higher to manufacture desired fluorescent particles.

Next, an explanation will be given on a step of mixing the two or more kinds of fluorescent particles and compacting them into an arbitrary shape by pressurizing the mixture of the fluorescent particles at a temperature in the supercooled liquid regions.

The two or more kinds of fluorescent particles whose main phase is an amorphous phase containing the above-described main components can be mixed by wet mixing using a ball mill, dry mixing using a V-type mixer, etc. In order to obtain a transparent phosphor which provides white fluorescent light, it is necessary to be able to obtain light emission based on color mixture of two or more kinds of fluorescent spectra. Therefore, the transparent phosphor is composed of two or more kinds of fluorescent phases having fluorescent spectra of different wavelengths, i.e., composed of two or more kinds of fluorescent phases different at least in R. Hence, the fluorescent particles to be mixed are appropriately selected such that a white color suited to a purpose can be obtained based on the fluorescent spectra of the particles.

For example, the transparent phosphor having a desired shape can be obtained by the steps described below. The material powder to be compacted, which is obtained by mixing the two or more kinds of fluorescent particles, can be compacted into a desired shape by filling them in a die having a desired shape, heating them up to a temperature in the supercooled liquid regions of the fluorescent particles, and pressurizing them while maintaining this temperature. The supercooled liquid regions can be measured by an analysis based on a differential scanning calorimeter (DSC), and can be observed as ranges in which endotherm occurs.

In the method of manufacturing a transparent phosphor according to the present invention, a supercooled liquid region is a temperature range from a glass transition temperature to a crystallization temperature, and might be possessed by some solids that have a supercooled liquid structure before the solids start to crystallize. In this temperature range, such solids tend to provide viscous fluidity.

The supercooled liquid regions of the fluorescent particles whose main phase is an amorphous phase containing the above-described main components exist in a temperature range between about 850 and 1050°C with a range width of 50 to 100°C. By selecting and mixing fluorescent particles that have overlapping supercooled liquid regions, it is possible to obtain a material powder to be compacted, which has an especially fine compactability. However, as long as the particles are pressurized at a temperature at which 30vol% or more of the components of the two or more kinds of fluorescent particles are in their suppercooled liquid ranges, the mixed two or more kinds of fluorescent particles provide viscous fluid workability that is sufficient for dense compacting. Therefore, at this volume percentage, the density of the transparent phosphor to be obtained will not be extremely poor. Further, it becomes easier to obtain a dense transparent phosphor if the compacting pressure is 50MPa or higher, though it depends on the shape desired and the speed at which the pressure is applied.

Compacting into the transparent phosphor can be carried out under vacuum, a reducing gas, or an inert gas by using a die made of a high-melting-point metal such as graphite, Mo, etc., but may be carried out under air by using a die made of an alloy having a fine antioxidative property such as inconel, etc.

According to the method of manufacturing a transparent phosphor according to the present invention, a transparent phosphor whose fluorescent amorphous phases contain a crystalline phase can be obtained by (a) forming the amorphous phase by cooling and solidifying molten particles that contains the above-described main components by adjusting the conditions for melting and solidifying the molten particles made of the components of the fluorescent particles, and by (b) firstly obtaining a transparent phosphor composed of fluorescent phases whose main phase is the amorphous phase, and then crystallizing at least a part of the amorphous phase by heating the transparent phosphor by adjusting the above conditions.

When obtaining particles having an amorphous phase in which a crystalline phase exists, the adjustment of conditions for melting and solidifying the molten particles in (a) may be done by, for example, lowering the melting temperature or lowering the temperature of the molten particles when the molten particles are subjected to a refrigerant, whereby it becomes easier to obtain fluorescent particles having an amorphous phase in which the crystalline phase exists. On the other hand, when a composition having a high melting point or a composition that is greatly different from an eutectic composition is used, it becomes easier to obtain particles composed only of the amorphous phase by raising the melting temperature or the temperature of the molten particles when the molten particles are subjected to a refrigerant.

After fluorescent particles are obtained from the molten particles whose amorphous phase contains a crystalline phase, it is possible to obtain a transparent phosphor in the way described above by mixing the two or more kinds of fluorescent particles, and compacting the mixture of the fluorescent particles into an arbitrary shape by pressurizing the mixture at a temperature at which 30vol% or more of the components of the two or more fluorescent particles are in their supercooled liquid regions. In this case, if the amorphous phase accounts for 70vol% or more, the viscous fluidity in the supercooled liquid regions will not be greatly spoiled and hence a dense transparent phosphor can be obtained.

When taking the flow of (b) of firstly obtaining a transparent phosphor composed of fluorescent phases whose main phase is the amorphous phase and then crystallizing at least a part of the amorphous phase by heating the transparent phosphor by adjusting the conditions, a part of the amorphous phase is crystallized by heating the spherical particles containing the amorphous phase in order to precipitate a crystalline phase, or to enhance crystallinity. At this time, the heating temperature is preferably 800°C or higher, and more preferably 1000 to 1700°C. It is possible to control the structure by appropriately selecting the temperature, the time period, the temperature elevation speed, etc. in the heating process, and to manufacture a transparent phosphor having a structure matching the purpose. For example, when precipitating a crystalline phase or enhancing crystallinity by performing heating at a temperature that is close to the melting point of the fluorescent particles whose main phase is the amorphous phases that constitute the transparent phosphor, a high temperature elevation speed and a short time period of heating are selected in order to prevent the crystalline phase from being coarsened to make it impossible to maintain a fine spherical shape. Further, crystal precipitation and growth might moderately occur even in the supercooled liquid regions. Therefore, a measure such as elongating the time spent on compacting according to the composition, etc. should be taken in order to allow crystal precipitation and growth only within a range in which the transparency of the transparent phosphor will not be spoiled. Whereby, a transparent phosphor whose main phase is an amorphous phase that contains a crystalline phase can be obtained.

Any methods of heating the transparent phosphor may be used as long as the methods can heat a transparent phosphor having an arbitrary shape at a temperature equal to or higher than 800°C and equal to or lower than the melting point. Hence, any methods may be used, such as resistive heating, high-frequency induction heating using a susceptor, laser heating, electron beam heating, heating by light, heating by infrared, etc.

Methods that are generally used include: a method of setting the transparent phosphor in a crucible, etc. that is made of ceramics such as aluminum oxide, magnesium oxide, etc., or made of a high-melting-point metal such as molybdenum, tantalum, platinum, iridium, etc. and heating the transparent phosphor together with the crucible; and a method of heating the transparent phosphor by moving it through a tubular furnace made of the same material as the above crucible and having a certain temperature gradient and a torrid region.

The heating process of the spherical particles may be carried out in any atmosphere such as air, an inert gas, a reducing gas, a hydrocarbon gas, vacuum, etc., but the atmosphere may sometimes be limited depending on the crucible and the heating method to be used, etc.

### EXAMPLE

Next, an Example 1 of the transparent phosphor according to the present invention will be explained. First, fluorescent particles 1 to be the material of the material powder to be compacted were produced according to the following method. α-Al₂O₃ powder, Y₂O₃ powder, and Tb₄O₇ powder were used as materials. The α-Al₂O₃ powder, the Y₂O₃ powder, and the Tb₄O₇ powder were mixed by a wet ball mill using water at a ratio by weight of 65.3:29.3:5.4 given in the order starting from the first powder, and the obtained slurry was granulated and dried by a spray drier to produce granular particles having an average particle size of 11µm. The obtained granular particles were fed to a flame formed by combusting a mixed gas of oxygen and acethylene in parallel with the direction in which the mixed gas was blown out. After the particles were melted and became spherical in the flame, the molten particles were subjected to running water by bringing the flame tip into the running water. Thus, the molten particles were solidified and the fluorescent particles 1 were obtained.

The average particle size of the obtained fluorescent particles 1 was 8µm. It was found out that the spherical fluorescent particles according to the Example 1 were composed of an amorphous phase made of Al, Y, O, and Tb, based on X-ray diffraction using a Cu-Kα ray, transmission electron microscope observation, and an analysis of a characteristic X-ray by a semiconductor X-ray detector provided in the transmission electron microscope. The fluorescent particles were observed to have caused endotherm at 870°C to 930°C based on an analysis by a differential scanning calorimeter (DSC), and hence it was found out that this temperature range was the supercooled liquid region, i.e., that the fluorescent particles had viscous fluid workability in this temperature range. The fluorescent particles 1 were cleaned by acetone and then dried.

Next, fluorescent particles 2 to be the material of the material powder to be compacted were produced according to the following method. The fluorescent particles 2 were obtained by the same method as the fluorescent particles 1 except that the material composition was changed to α-Al₂O₃ powder, Y₂O₃ powder, and Eu₂O₃ powder which were at a ratio by weight of 63.9:22.3:13.8 in the order starting from the first powder. The average particle size of the fluorescent particles 2 was 8µm. It was found out that the fluorescent particles 2 were composed of an amorphous phase made of Al, Y, O, and Eu, based on X-ray diffraction using a Cu-Kα ray, transmission electron microscope observation, and an analysis of a characteristic X-ray by a semiconductor X-ray detector provided in the transmission electron microscope. Like the fluorescent particles 1, the present fluorescent particles were observed to have caused endotherm at 870°C to 930°C based on an analysis by a differential scanning calorimeter (DSC), and hence it was found out that this temperature range was the supercooled liquid region, i.e., that the fluorescent particles had viscous fluid workability in this temperature range. The fluorescent particles 2 were cleaned by acetone and then dried and heated in the air at 800°C.

Next, the fluorescent particles 1 and 2 were dry-blended by a V type mixer such that the weight by ratio between the former and the latter became 30:70. The material to be compacted, which was obtained by mixing the fluorescent particles 1 and 2, was filled in a cylindrical die made of graphite and having a circular void of φ12 mm in the vertical direction, and a punching bar made of graphite was inserted into the die from above. When filling, Mo sheets having a fine surface smoothness were inserted at the upper and lower surfaces of the material to be compacted. Then, the material was set together with the graphite die in a hot press apparatus having a vacuum chamber in which a resistive-heating-type graphite heater was provided, and then heated in the vacuum. The temperature was once kept at 800°C to apply a pressure of 100 MPa in the direction perpendicular to the circular surface while maintaining the temperature in the die at the constant level, and then with the pressure applied, the temperature was again elevated such that the material was maintained at 900°C that was in the supercooled liquid region of the fluorescent particles 1 and 2 for five minutes. After this, the material was cooled, and then a transparent phosphor according to the Example 1 which was compacted into a disk shape having a diameter of 12 mm and a thickness of 0.4 mm was taken out from the graphite die.

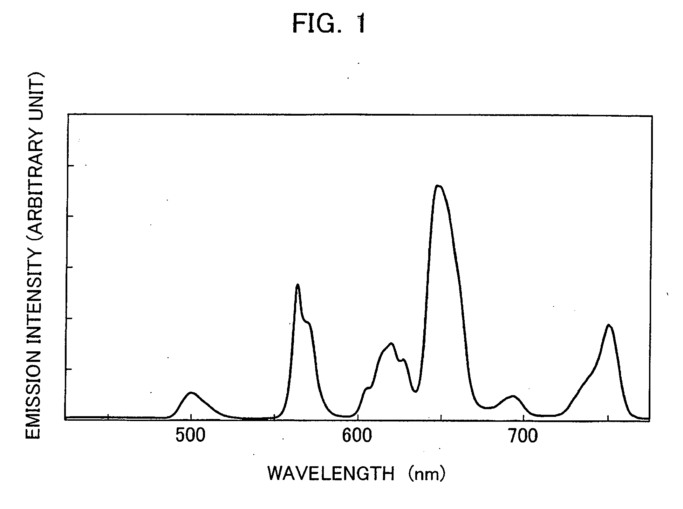

The transparent phosphor according to the Example 1 achieved a fine surface smoothness because the surfaces of the inserted Mo sheets having a fine surface smoothness were well transferred thereto, and also achieved a fine transparency. Fluorescent spectra of the transparent phosphor according to the Example 1 were measured. The fluorescent spectra obtained when the transparent phosphor was excited by an excitation wavelength of 380 nm were shown in Fig. 1. It was confirmed that the transparent phosphor according to the Example 1 had plural fluorescent spectra in the visible range. It was also confirmed that the transparent phosphor provided fine white fluorescent light when irradiated with black light having a peak wavelength of 370 nm.

### Brief Description of Drawings

[Fig. 1] Fig. 1 is a diagram showing fluorescent spectra of a transparent phosphor according to an Example 1 in response to an excitation wavelength of 380 nm.

## Claims

1. A transparent phosphor which provides white fluorescent light upon incidence of excitation light,
wherein the transparent phosphor comprises two or more kinds of fluorescent phases,
the fluorescent phases comprise a main phase made of an amorphous phase mainly composed of A, wherein A is any one or more elements of Al, Ga, Ge, W, P, V, Zn, Si, B, Mg, Ca, Ba, Sr, and Sc, Ln, wherein Ln is any one or more elements of Y, Gd, La, Sm, Dy, Ho, Er, Yb, and Lu, O, and R as an activator, wherein R is any one or more elements of Eu, Tb, Ce, Sm, Tm, Pr, Nd, Dy, Ho, Er, Yb, Mn, Ti, Fe, Cr, and Pb which is/are other than an element or elements selected as Ln, and the two or more kinds of fluorescent phases are different at least in kind of R or average valence of R;
wherein the phosphor is compacted; and
wherein the transparent phosphor is obtained by mixing two or more kinds of fluorescent particles each having a main phase made of the amorphous phase, and pressurizing a mixture of the fluorescent particles at a temperature at which 30vol% or more of the two or more kinds of fluorescent particles are in their supercooled liquid regions.

2. The transparent phosphor according to claim 1, wherein the transparent phosphor is obtained by mixing fluorescent particles each having a main phase made of the amorphous phase and having overlapping supercooled liquid regions, and pressurizing the fluorescent particles at a temperature at which the supercooled liquid regions overlap.

3. The transparent phosphor according to claim 1 or 2, wherein the amorphous phase of the fluorescent particles is formed by cooling and solidifying molten particles made of components of the fluorescent particles.

4. The transparent phosphor according to any of claims 1 to 3, wherein the fluorescent particles are spherical fluorescent particles.

5. The transparent phosphor according to any of claims 1 to 4, wherein the amorphous phase contains a crystalline phase.

6. The transparent phosphor according to claim 5, wherein a longer diameter of the crystalline phase is 200nm or shorter.

7. The transparent phosphor according to any of claims 1 to 6, wherein A is any one or more elements of Al, Si, and P, Ln is any one or more elements of Y, Gd, La, Dy, and Lu, and R is any one or more elements of Eu, Tb, Ce, Sm, Tm, and Pr.

8. A method of manufacturing the transparent phosphor according to claim 1, and wherein the phosphor is compacted, comprising:
a step of mixing two or more kinds of fluorescent particles each having a main phase made of the amorphous phase; and
a step of pressurizing a mixture of the fluorescent particles at a temperature at which 30vol% or more of components of the two or more kinds of fluorescent particles are in their supercooled liquid regions.

9. A method of manufacturing the transparent phosphor according to claim 2, and wherein the phosphor is compacted, comprising:
a step of mixing fluorescent particles each having a main phase made of the amorphous phase and having overlapping supercooled liquid regions; and
a step of pressurizing a mixture of the fluorescent particles at a temperature at which the supercooled liquid regions overlap.

10. The method of manufacturing the transparent phosphor according to claim 8 or 9, further comprising
a step of obtaining the fluorescent particles by forming the amorphous phase by cooling and solidifying molten particles made of components of the fluorescent particles.

11. The method of manufacturing the transparent phosphor according to any of claims 8 to 10, wherein the fluorescent particles are spherical fluorescent particles.

## Patentansprüche

1. Transparenter Leuchtstoff, der bei Einfall von Anregungslicht weiß fluoreszierendes Licht liefert,
wobei der transparente Leuchtstoff zwei oder mehr Arten fluoreszierender Phasen umfasst;
die fluoreszierenden Phasen als Hauptphase eine amorphe Phase umfassen, die hauptsächlich hergestellt ist aus A, wobei A eines oder mehrere Elemente ausgewählt aus Al, Ga, Ge, W, P, V, Zn, Si, B, Mg, Ca, Ba, Sr und Sc ist; O; Ln, wobei Ln eines oder mehrere Elemente ausgewählt aus Y, Gd, La, Sm, Dy, Ho, Er, Yb und Lu ist; und R als Aktivator, wobei R eines oder mehrere Elemente ausgewählt aus Eu, Tb, Ce, Sm, Tm, Pr, Nd, Dy, Ho , Er, Yb, Mn, Ti, Fe, Cr, Pb ist und sich von den für Ln ausgewählten Element unterscheidet/unterscheiden; und die zwei oder mehr Arten fluoreszierender Phasen sich zumindest in R oder der durchschnittlichen Wertigkeit von R unterscheiden;
wobei der Leuchtstoff verdichtet ist; und
wobei der transparente Leuchtstoff erhalten wird durch: das Mischen zweier oder mehrerer Arten fluoreszierender Teilchen, die jeweils eine Hauptphase bestehend aus der amorphen Phase aufweisen; und Unter-Druck-Setzen einer Mischung der fluoreszierenden Teilchen bei einer Temperatur, bei der sich 30 Vol. % oder mehr der zwei oder mehr Arten fluoreszierender Teilchen im Zustandsbereich unterkühlter Flüssigkeiten befinden.

2. Transparenter Leuchtstoff gemäß Anspruch 1, wobei der transparente Leuchtstoff erhalten wird durch:
das Mischen fluoreszierender Teilchen, die jeweils eine Hauptphase bestehend aus der amorphen Phase und überlappende Zustandsbereiche unterkühlter Flüssigkeiten aufweisen; und
das Unter-Druck-Setzen der fluoreszierenden Teilchen bei einer Temperatur, bei der sich die Zustandsbereiche unterkühlter Flüssigkeiten überlappen.

3. Transparenter Leuchtstoff gemäß Anspruch 1 oder 2, wobei die amorphe Phase der fluoreszierenden Teilchen durch das Abkühlen und Verfestigen geschmolzener Teilchen gebildet wird, die aus Komponenten der fluoreszierenden Teilchen bestehen.

4. Transparenter Leuchtstoff gemäß einem der Ansprüche 1 bis 3, wobei die fluoreszierenden Teilchen kugelförmige fluoreszierende Teilchen sind.

5. Transparenter Leuchtstoff gemäß einem der Ansprüche 1 bis 4 , wobei die amorphe Phase eine kristalline Phase beinhaltet.

6. Transparenter Leuchtstoff gemäß Anspruch 5, wobei der längere Durchmesser der kristallinen Phase 200 nm oder weniger beträgt.

7. Transparenter Leuchtstoff gemäß einem der Ansprüche 1 bis 6, wobei A eines oder mehrere Elemente ausgewählt aus Al, Si und P ist; Ln eines oder mehrere Elemente ausgewählt aus Y, Gd, La, Dy, und Lu ist; und R eines oder mehrere Elemente ausgewählt aus Eu, Tb, Ce, Sm, Tm und Pr ist.

8. Verfahren zur Herstellung des transparenten Leuchtstoffs gemäß Anspruch 1, wobei der Leuchtstoff verdichtet wird, **dadurch gekennzeichnet, dass** das Verfahren folgende Schritte umfasst:
das Mischen zweier oder mehrerer Arten fluoreszierender Teilchen, welche jeweils eine aus einer amorphen Phase gebildeten Hauptphase aufweisen; und
das Unter-Druck-Setzen einer Mischung der fluoreszierenden Teilchen bei einer Temperatur, bei der sich 30 Vol. % oder mehr der zwei oder mehr Arten fluoreszierender Teilchen im Zustandsbereich unterkühlter Flüssigkeiten befinden.

9. Verfahren zur Herstellung des transparenten Leuchtstoffs gemäß Anspruch 2, wobei der Leuchtstoff verdichtet wird, **dadurch gekennzeichnet, dass** das Verfahren folgende Schritte umfasst:
das Mischen fluoreszierender Teilchen, welche jeweils eine aus einer amorphen Phase gebildeten Hauptphase und überlappende Zustandsbereiche unterkühlter Flüssigkeiten aufweisen; und
das Unter-Druck-Setzen einer Mischung der fluoreszierenden Teilchen bei einer Temperatur, bei der sich die Zustandsbereiche unterkühlter Flüssigkeiten überlappen.

10. Verfahren zur Herstellung des transparenten Leuchtstoffs gemäß Anspruch 8 oder 9, ferner umfassend einen Schritt zur Gewinnung der fluoreszierenden Teilchen, bei dem die amorphe Phase durch das Abkühlen und Verfestigen geschmolzener Partikel gebildet wird, die aus Komponenten der fluoreszierenden Teilchen bestehen.

11. Verfahren zur Herstellung des transparenten Leuchtstoffs gemäß einem der Ansprüche 8 bis 10, wobei die fluoreszierenden Teilchen kugelförmige fluoreszierende Teilchen sind.

## Revendications

1. Luminophore transparent procurant une lumière fluorescente blanche lorsqu'il est soumis à une lumière d'excitation,
dans lequel le luminophore transparent comprend deux ou plusieurs types de phases fluorescentes,
les phases fluorescentes comprennent une phase principale constituée d'une phase amorphe principalement composée de A, dans lequel A est un ou plusieurs éléments parmi Al, Ga, Ge, W, P, V, Zn, Si, B, Mg, Ca, Ba, Sr et Sc, Ln, dans lequel Ln est un ou plusieurs éléments quelconques parmi Y, Gd, La, Sm, Dy, Ho, Er, Yb et Lu, 0, et R comme activateur, dans lequel R est un ou plusieurs éléments quelconques parmi Eu, Tb, Ce, Sm, Tm, Pr, Nd, Dy, Ho, Er, Yb, Mn, Ti, Fe, Cr et Pb, qui sont différents d'un ou plusieurs éléments sélectionnés comme Ln, et les deux ou plusieurs types de phases fluorescentes sont différents au moins en nature de R ou en valence de la valence moyenne de R ;
dans lequel le luminophore est compacté ; et
dans lequel le luminophore transparent est obtenu en mélangeant deux ou plusieurs types de particules fluorescentes qui ont chacune une phase principale constituée de la phase amorphe, et la pressurisation d'un mélange des particules fluorescentes à une température à laquelle 30 % en volume ou plus des deux ou plusieurs types de particules fluorescentes se trouvent dans leurs zones liquides en surfusion.

2. Luminophore transparent selon la revendication 1, dans lequel le luminophore transparent est obtenu en mélangeant des particules fluorescentes ayant chacune une phase principale constituée de la phase amorphe et comportant des zones liquides en surfusion qui se chevauchent, et en mettant sous pression les particules fluorescentes à une température à laquelle les zones liquides en surfusion se chevauchent.

3. Luminophore transparent selon la revendication 1 ou 2, dans lequel la phase amorphe des particules fluorescentes est formée par refroidissement et solidification de particules fondues constituées de composants des particules fluorescentes.

4. Luminophore transparent selon l'une quelconque des revendications 1 à 3, dans lequel les particules fluorescentes sont des particules fluorescentes sphériques.

5. Luminophore transparent selon l'une quelconque des revendications 1 à 4, dans lequel la phase amorphe contient une phase cristalline.

6. Luminophore transparent selon la revendication 5, dans lequel un plus grand diamètre de la phase cristalline est inférieur ou égal à 200 nm.

7. Luminophore transparent selon l'une quelconque des revendications 1 à 6, dans lequel A est un ou plusieurs éléments quelconques parmi Al, Si et P, Ln est un ou plusieurs éléments quelconques parmi Y, Gd, La, Dy et Lu, et R est un ou plusieurs éléments quelconques parmi Eu, Tb, Ce, Sm, Tm et Pr.

8. Procédé de fabrication du luminophore transparent selon la revendication 1 et dans lequel le luminophore est compacté, comprenant :
une étape de mélange de deux ou plusieurs types de particules fluorescentes qui ont chacune une phase principale constituée de la phase amorphe ; et
une étape de pressurisation d'un mélange des particules fluorescentes à une température à laquelle 30 % en volume ou plus des composants des deux ou plusieurs types de particules fluorescentes se trouvent dans leurs zones liquides en surfusion.

9. Procédé de fabrication du luminophore transparent selon la revendication 2 et dans lequel le luminophore est compacté, comprenant :
une étape de mélange de particules fluorescentes qui présentent chacune une phase principale constituée de la phase amorphe et comportant des zones liquides en surfusion qui se chevauchent ; et
une étape de pressurisation d'un mélange des particules fluorescentes à une température à laquelle les zones liquides en surfusion se chevauchent.

10. Procédé de fabrication du luminophore transparent selon la revendication 8 ou 9, comprenant en outre
une étape d'obtention des particules fluorescentes en formant la phase amorphe par refroidissement et solidification des particules fondues constituées de composants des particules fluorescentes.

11. Procédé de fabrication du luminophore transparent selon l'une quelconque des revendications 8 à 10, dans lequel les particules fluorescentes sont des particules fluorescentes sphériques.
